# EUROPEAN PATENT SPECIFICATION

(11) **EP 1 854 699 B1**
(45) Date of publication and mention of the grant of the patent: **15.06.2011**
(21) Application number: 07008177.3
(22) Date of filing: 23.04.2007
(51) Int. Cl.: B62D 1/184

(54) **Tliting and telescopic steering apparatus having rotatable locking member**
Schwenkbare und ausziehbare Lenkvorrichtung mit drehbarem Sperrelement
Appareil de direction télescopique et à basculement comportant une pièce de serrage rotative

(30) Priority: 11.05.2006 KR 20060042242
(43) Date of publication of application: 14.11.2007
(73) Proprietor: Mando Corporation, Pyeongtaek-si, Gyeonggi-do (KR)
(72) Inventor: Oh, Jae Moon, Wonju-si, Gangwon-do (KR)
(74) Representative: Bosch, Matthias

(56) References cited:
- EP-A- 1 223 096
- FR-A- 2 360 454
- GB-A- 1 523 638

## Description

### Field of the invention

The present invention relates to a tilting and telescopic steering apparatus having a rotatable locking member. More particularly, the present invention relates to a tilting and telescopic steering apparatus having a rotatable locking member which, upon displacement of a tube and a distance member due to a collision accident of an automobile, rotates to apply a load to the distance member, thereby maintaining the tilting and telescopic operations in a locked state.

### BACKGROUND OF THE INVENTION

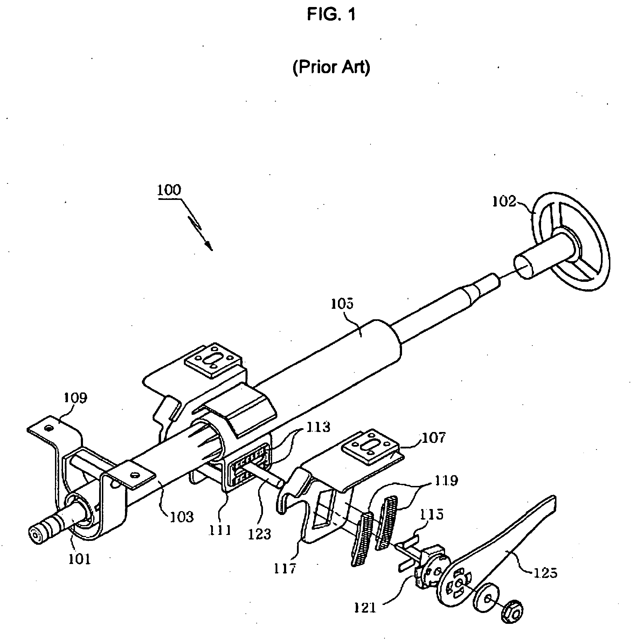

FIG. 1 is an exploded perspective view of the main parts of a conventional tilting and telescopic steering apparatus.

As shown in FIG. 1, the conventional tilting and telescopic steering apparatus 100 includes an inner tube 103 and an outer tube 105 surrounding a steering shaft 101 so as to be relatively slidable along the steering shaft, an upper bracket 107 and a lower bracket 109 coupled to a vehicle body for supporting the steering shaft 101, a distance member 111 coupled to a lower portion of the outer tube 105, a telescopic stationary gear 113 provided on the side of the distance member 111, a telescopic movable gear 115 engaged with the stationary gear 113, a plate bracket 117 provided outside the distance member 111, a tilt stationary gear 119 provided on the plate bracket 117, a tilt movable gear 121 engaged with the tilt stationary gear 119, and an adjusting bolt 123 passing through the distance member 111 and the plate bracket 117.

In the prior art having such construction, upon the completion of the tilting and telescoping operations, an adjusting lever 125 is rotated to allow the telescopic movable gear 115 to be engaged with the telescopic stationary gear 113 and to allow the tilt movable gear 121 to be engaged with the tilt stationary gear 119 as well, thereby maintaining the locked state.

When external shocks are transferred to the steering shaft 101 during, for example, a collision accident of an automobile, the inner tube 103 or the outer tube 105, in the case that the tilting and telescoping operations are unlocked, a pop-up phenomenon that the steering shaft 101 and the steering wheel 102 leap up toward a driver may occur, potentially injuring the driver. Maintenance of the locked state is an essential factor for the protection of the driver.

However, according to the prior art, the locking of the tilting and telescoping operations are maintained by gear engagement, so that there should be provided a telescopic stationary gear 113, the telescopic movable gear 115, the tilt stationary gear 119, and the tilt movable gear 121.

As a result, in the prior art, there was a problem in that the number of required parts increases and the manufacturing process is complicated, so that the manufacturing period for a steering apparatus is lengthened and manufacturing costs are increased.

Furthermore a device according to the preamble of claim 1 is disclosed in document FR-A-2 360 454.

### SUMMARY OF THE INVENTION

Accordingly, the present invention has been made to solve the above-mentioned problems occurring in the prior art, and the present invention provides a tilting and telescopic steering apparatus having a rotatable locking member which, upon displacement of a tube and a distance member due to a collision accident of an automobile, rotates to apply a load to the distance member, thereby maintaining the tilting and telescoping operations in a locked state.

In order to accomplish the above object, in accordance with an aspect of the present invention, there is provided a tilting and telescopic steering apparatus comprising: a tube surrounding a steering shaft; a distance member coupled to a circumferential face of the tube; a plate bracket surrounding a circumferential face of the distance member; an adjusting bolt passing through the distance member and the plate bracket; and a locking member rotatably provided on one end of the adjusting bolt.

### BRIEF DESCRIPTION OF THE DRAWINGS

The above and other objects, features and advantages of the present invention will be more apparent from the following detailed description taken in conjunction with the accompanying drawings, in which:
FIG. 1 is an exploded perspective view of the main parts of a conventional tilting and telescopic steering apparatus;
FIG. 2A is a partial perspective view of a tilting and telescopic steering apparatus having a rotatable locking member according to a preferred embodiment of the present invention;
FIG. 2B is a front view of a tilting and telescopic steering apparatus having a rotatable locking member according to a preferred embodiment of the present invention;
FIG. 3 is a sectional view illustrating the state before the locking member is rotated; and
FIG. 4 is a sectional view illustrating the state after the locking member is rotated.

### DETAILED DESCRIPTION OF THE EXEMPLARY EMBODIMENTS

Hereinafter, an exemplary embodiment of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

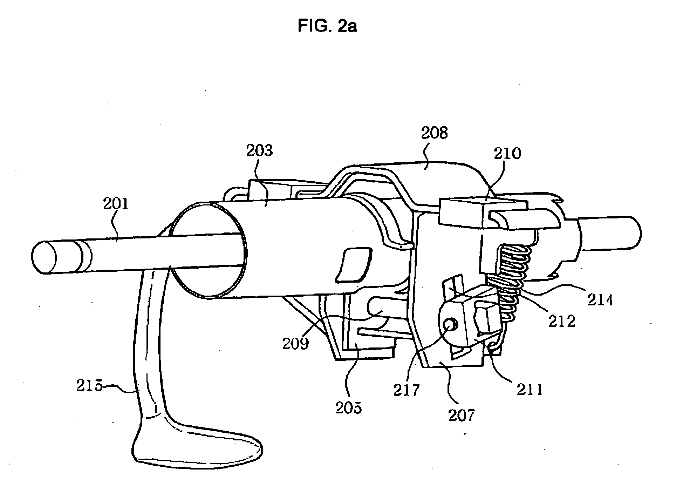

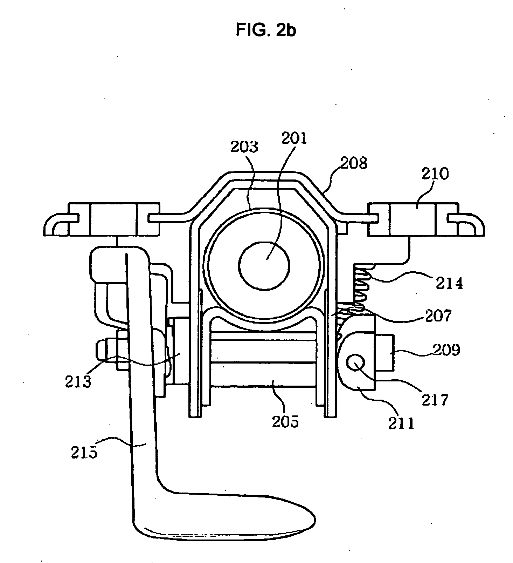

FIG. 2A is a partial perspective view of a tilting and telescopic steering apparatus having a rotatable locking member according to a preferred embodiment of the present invention, and FIG. 2B is a front view of a tilting and telescopic steering apparatus having a rotatable locking member according to a preferred embodiment of the present invention.

As shown in FIGS. 2A and 2B, the tilting and telescopic steering apparatus includes a tube 203 surrounding a steering shaft 201, a distance member 205 coupled to a circumferential face of the tube 203, a plate bracket 207 surrounding a circumferential face of the distance member 205, an adjusting bolt 209 passing through the distance member 205 and the plate bracket 207, and a locking member 211 rotatably provided on one end of the adjusting bolt 209.

The tube 203 is a hollow shape surrounding the steering shaft 210, the sectional shape of which tube is a circle or an oval. However, the present invention is not limited to these shapes.

The distance member 205 is fixedly coupled to a lower circumferential face of the tube 203 so that it moves together with the tube 203. In addition, the adjusting bolt 209 passes through the both lower faces of the distance member 205, so that upon the movement of the tube 203 and the distance member 205 together with each other, the adjusting bolt 209 also moves together with the tube 203 and the distance member 205.

The plate bracket 207 surrounds the upper portion of the tube 203 and then comes into contact with the both circumferential faces of the distance member 205.

The plate bracket 207 is connected, on its upper portion, with an upper bracket 208, both sides of which are coupled with capsules 210 which are installed on the vehicle body. Meanwhile, the upper bracket 208 and the distance member 205 may be connected with an elastic member 214, such as a coil spring, enabling the distance member 205 to be easily moved.

The plate bracket 207 is provided, at its lower side, with a long hole 212, through which the adjusting bolt 209 passes. Preferably, the long hole 212 is shaped like a circle about a rotation axis that is a reference point of tilting control.

The adjusting bolt 209 is provided so as to pass through the distance member 205 and the plate bracket 207 at the same time. Herein, while the adjusting bolt 209 is fixedly coupled to the distance member 205 so as not to relatively move therefrom, it passes through the long hole 212 of the plate bracket 207, so that it can move along the long hole 212 with respect to the plate bracket 207.

The adjusting bolt 209 is provided, on its one end, with a cam 213 and the adjusting lever 215, and is provided, on the other end, with the locking member 211 such that the locking member is able to rotate.

When a driver rotates the adjusting lever 215 in one direction, the cam 213 is driven to move the adjusting bolt 209 in an axial direction. When the adjusting bolt 209 moves in one direction so that the distance member 205 and the plate bracket 207 are separated from each other, the driver can control the tilting and telescoping operations. In addition, when the distance member 205 and the plate bracket 207 come into contact with each other, the tilting and telescoping operations become locked.

The locking member 211 is provided on the other end of the adjusting bolt 209 such that it is rotatably coupled to the adjusting bolt by means of a hinge pin 217 inserted into the adjusting bolt 209. Meanwhile, the locking member 211 has a shape like an oval facing the plate bracket 207.

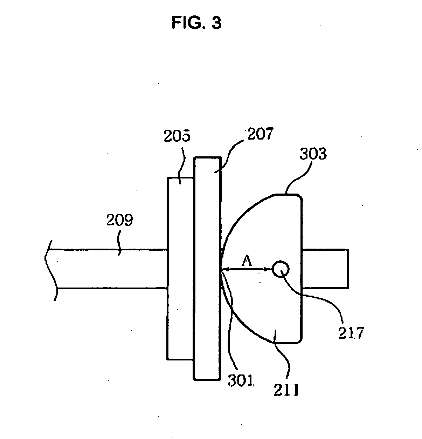

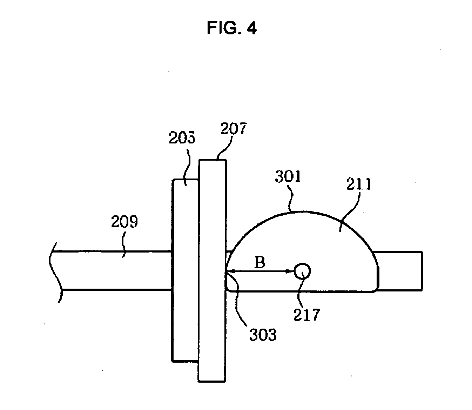

FIG. 3 is a sectional view illustrating the state before the locking member 211 is rotated, and FIG. 4 is a sectional view illustrating the state after the locking member 211 is rotated.

As shown in FIG. 3, before rotation, the locking member 211 faces, at its minor axis face 301, against the plate bracket 207, but as shown in FIG. 4, after rotation, the locking member 211 rotates counterclockwise so that a major axis face 303 thereof faces against the plate bracket 207.

When the minor axis face 301 first faces against the plate bracket 207, and then the major axis face 303 faces against the plate bracket 207 through counterclockwise rotation of the locking member 211, there occurs displacement by a difference between a distance A from the hinge pin 217 to the minor axis face 301 and a distance B from the hinge pin 217 to the major axis face 303, thereby allowing the plate bracket 207 to closely contact the distance member 205. As a result, the locked state of the tilting and telescoping operations are maintained or intensified.

In addition, the outer shape of the locking member 211 having above function is not limited to an oval shape, but may be of various shapes such as a multi-stage line, a parabola, or a sinuous curve, so long as the plate bracket 207 comes into close contact with the distance member 205 through the rotation of the locking member 211.

Description will now be made in detail of the operation principle of the tilting and telescopic steering apparatus having the above construction according to the preferred embodiment of the invention.

In the case that the collision accident of an automobile occurs under the locked state of the tilting and telescoping operations, when an external force is transferred to the steering shaft 201, the tube 203, and the distance member 205, the tube 203 and the distance member 205 are moved toward the upper bracket 208.

In addition, upon movement of the distance member 205, the adjusting bolt 209 fixedly coupled to the distance member 205 also moves along the long hole 212.

Further, upon the movement of the adjusting bolt 209, the locking member 211 rotates about the hinge pin 217, so that the contact face of the locking member 211 with the plate bracket 207 is transited from the minor axis face 301 to the major axis face 303. Thus, the plate bracket 207 and the distance member 205 come into closer contact with each other, maintaining the locked state of the tilting and telescoping operations.

According to the tilting and telescopic steering apparatus of the preferred embodiment of the invention, instead of a gear engagement structure, the rotatable locking member is provided so as to maintain the locked state of the tilting and telescoping operations, reducing the number of parts required, and therefore the manufacturing period and cost, thereby solving the problems occurring in the prior art.

As set forth before, according to the present invention, there is provided the rotatable locking member instead of a gear engagement structure, so as to maintain the locked state of the tilting and telescoping operations, reducing the number of parts required, and therefore the manufacturing period and costs of manufacturing, assembling and installing a steering apparatus.

Although an exemplary embodiment of the present invention has been described for illustrative purposes, those skilled in the art will appreciate that various modifications, additions and substitutions are possible, without departing from the scope of the invention as disclosed in the accompanying claims. The scope of the claims, therefore, should be accorded the broadest interpretation so as to encompass all such modifications, similar arrangements and equivalents.

## Claims

1. A tilting and telescopic steering apparatus comprising:
a tube (203) surrounding a steering shaft (201);
a distance member (205) coupled to a circumferential face of the tube (203);
a plate bracket (207) surrounding a circumferential face of the distance member (205);
an adjusting bolt (209) passing through the distance member (205) and the plate bracket (207);
the adjusting bolt (209) being provided, on its one end, with a cam (213) and an adjusting lever (215) to move the adjusting bolt (209) in an axial direction, **characterized in that**
a locking member (211) is rotatably provided on the other end of the adjusting bolt (209), the locking member (211) being shaped such that its radius increases according to the rotation thereof.

2. The tilting and telescopic steering apparatus according to claim 1, wherein the plate bracket (207) is provided with a long hole (212) through which the adjusting bolt (209) passes.

3. The tilting and telescopic steering apparatus according to claim 2, wherein the long hole (212) is shaped like a circle.

4. The tilting and telescopic steering apparatus according to claim 2, wherein the locking member (211) is connected with the adjusting bolt (209) via a hinge pin (217).

5. The tilting and telescopic steering apparatus according to claim 1, wherein the locking member (211) has an outer shape like an oval.

6. The tilting and telescopic steering apparatus according to claim 5, wherein the plate bracket (207) is provided, on its upper portion, with an upper bracket (208), and the upper bracket (208) and the distance member (205) are connected with an elastic member (214).

## Patentansprüche

1. Schwenk- und ausziehbare Lenkvorrichtung mit:
einem Rohr (203), das eine Lenkwelle (201) umgibt;
einem Distanzelement (205), das an eine Umfangsfläche des Rohrs (203) gekoppelt ist;
einer plattenförmigen Klammer (207), die eine Umfangsfläche des Distanzelements (205) umgibt;
einer Einstellschraube (209), die durch das Distanzelement (205) und die plattenförmige Klammer (207) hindurchtritt;
wobei die Einstellschraube (209) an ihrem einen Ende mit einem Nocken (213) und einem Einstellhebel (215) zum Bewegen der Einstellschraube (209) in axialer Richtung versehen ist,
**dadurch gekennzeichnet, dass**
ein Sperrelement (211) drehbar an dem anderen Ende der Einstellschraube (209) vorgesehen ist, wobei das Sperrelement (211) so geformt ist, dass sein Radius gemäß der Drehung von diesem zunimmt.

2. Schwenk- und ausziehbare Lenkvorrichtung nach Anspruch 1, wobei die plattenförmige Klammer (207) mit einem Langloch (212) versehen ist, durch das die Einstellschraube (209) hindurchtritt.

3. Schwenk- und ausziehbare Lenkvorrichtung nach Anspruch 2, wobei das Langloch (212) kreisförmig ist.

4. Schwenk- und ausziehbare Lenkvorrichtung nach Anspruch 2, wobei das Sperrelement (211) über einen Schwenkstift (217) mit der Einstellschraube (209) verbunden ist.

5. Schwenk- und ausziehbare Lenkvorrichtung nach Anspruch 1, wobei das Sperrelement (211) eine ovale Außenform hat.

6. Schwenk- und ausziehbare Lenkvorrichtung nach Anspruch 5, wobei die plattenförmige Klammer (207) an ihrem oberen Abschnitt mit einer oberen Klammer (208) versehen ist, und wobei die obere Klammer (208) und das Distanzelement (205) mit einem elastischen Element (214) verbunden sind.

## Revendications

1. Appareil de direction réglable en hauteur et en profondeur comprenant :
un tube (203) entourant un arbre de direction (201) ;
un élément de distance (205) couplé à une face circonférentielle du tube (203) ;
un support de plaque (207) entourant une face circonférentielle de l'élément de distance (205) ;
un boulon de réglage (209) passant à travers l'élément de distance (205) et le support de plaque (207) :
le boulon de réglage (209) étant prévu, sur une extrémité, avec une came (213) et un levier de réglage (215) pour déplacer le boulon de réglage (209) dans un sens axial, **caractérisé en ce que**
un élément de serrage (211) est prévu de manière rotative sur l'autre extrémité du boulon de réglage (209), l'élément de serrage (211) étant de forme telle que son rayon augmente en fonction de la rotation de celui-ci.

2. Appareil de direction réglable en hauteur et en profondeur selon la revendication 1, dans lequel le support de plaque (207) est prévu avec un trou long (212) à travers lequel le boulon de réglage (209) passe.

3. Appareil de direction réglable en hauteur et en profondeur selon la revendication 2, dans lequel le trou long (212) a la forme d'un cercle.

4. Appareil de direction réglable en hauteur et en profondeur selon la revendication 2, dans lequel l'élément de serrage (211) est connecté avec le boulon de réglage (209) par l'intermédiaire d'un axe de charnière (217).

5. Appareil de direction réglable en hauteur et en profondeur selon la revendication 1, dans lequel l'élément de serrage (211) a une forme extérieure comme un ovale.

6. Appareil de direction réglable en hauteur et en profondeur selon la revendication 5, dans lequel le support de plaque (207) est prévu, sur sa partie supérieure, avec un support supérieur (208), et le support supérieur (208) et l'élément de distance (205) sont connectés avec un élément élastique (214).
